Europäisches Patentamt

European Patent Office

Office européen des brevets

(11) Publication number: **0 074 186**
**B1**

(12) **EUROPEAN PATENT SPECIFICATION**

(45) Date of publication of patent specification: **21.05.86**

(21) Application number: **82304239.5**

(22) Date of filing: **11.08.82**

(51) Int. Cl.⁴: **H 02 H 3/02, H 02 H 7/30,**
**H 01 H 85/46**

(54) **Current limiting device.**

(30) Priority: **13.08.81 JP 127130/81**

(43) Date of publication of application:
**16.03.83 Bulletin 83/11**

(45) Publication of the grant of the patent:
**21.05.86 Bulletin 86/21**

(84) Designated Contracting States:
**CH DE FR GB IT LI**

(56) References cited:
**GB-A-1 214 682**
**GB-A-1 383 445**
**GB-A-2 040 614**
**US-A-3 644 860**

(73) Proprietor: **MITSUBISHI DENKI KABUSHIKI
KAISHA**
**2-3, Marunouchi 2-chome Chiyoda-ku
Tokyo 100 (JP)**

(72) Inventor: **Akisada, Mitsuo**
**9-9, Suzurandai Nishi-machi 5-chome
Kita-ku Kobe Hyogo Prefecture (JP)**
Inventor: **Yokouchi, Kazuhiro**
**5-21-3, Kitano**
**Itami Hyogo Prefecture (JP)**

(74) Representative: **Lawson, David Glynne et al
MARKS & CLERK 57-60 Lincoln's Inn Fields
London WC2A 3LS (GB)**

Courier Press, Leamington Spa, England.

## Description

This invention relates to a current limiting device employing a current limiting element including a current limiting material in the form of a solid or a liquid at normal current level, and vaporised when an overcurrent flows therethrough which is in excess of a predetermined magnitude, by Joule heat generated by the overcurrent, to rapidly raise its resistance thereby to limit the overcurrent; upon restoring the normal current due to the disappearance of the overcurrent, the vaporized current limiting material solidifies or liquefies, becoming again a good electrical conductor.

The current limiting elements of the type referred to are disclosed in Japanese utility model publication No. 11798/1978 and Japanese patent publication No. 5540/1974.

The current limiting element disclosed in Japanese patent publication No. 5540/1974 comprises a first electrode cylinder and an electrically insulating cylinder connected in longitudinally aligned relationship to each other. Surrounded by an electrically insulating member, the two connected cylinders are fitted into a second electrode cylinder from one end thereof, and have connected aligned central holes communicating with a central hole which is disposed within the second electrode cylinder and terminates at a pressure buffering cylinder fitted into the second electrode cylinder from the other end thereof. All the holes are filled with an amount of the current limiting material as described above, for example, an alkali metal such as sodium or potassium and the pressure buffering cylinder contains a piston biased by an inert gas such as argon in the cylinder.

Upon the occurrence of an overcurrent, the current limiting material is vaporised to limit the overcurrent as described above while a high vapour pressure developed at that time moves the piston against the pressure of the argon. After the current limitation, a circuit interrupter connected in series to the current limiting element interrupts the limited current allowing the current limiting material to cool and return to in its original solid or liquid state.

It is known to connect a current limiting element of the type referred across an impedance element in order to decrease the electrical energy applied to that element under the current limitation and to suppress the resulting switching voltage. The parallel combination of the current limiting and impedance elements has been connected to a plurality of parallel branches each including a circuit interrupter and a load. Upon the occurrence of a fault on any one of the branches, initially the current limiting element limits the overcurrent and then the circuit interrupter of the failed branch is opened to disconnect the failed branch from the remaining sound branches, while both a follow current flowing through the current limiting element and a current flowing through the parallel impedance element flow through the sound branches.

At that time after the current limiting element has limited the overcurrent, the electrically insulating cylinder disposed therein continues to be exposed to a plasma at an elevated temperature resulting from the vaporized current limiting material, until the current interrupter in the failed branch interrupts the limited overcurrent. Thus the electrically insulating cylinder might be damaged. This has meant a decrease in the number of the current limiting operations that the current limiting element can perform and therefore in its lifetime. Also since the parallel impedance element has had a magnitude determined in view of a decrease in electrical energy developed during the particular current limitation, that magnitude, and therefore the current flowing after current limiting operation, cannot be selected freely.

British Patent Specification GB—A—2040614 discloses a current limiting device comprising a current limiting element containing a current limiting material which is vaporised by an overcurrent in order to limit the overcurrent, a series-connected switch, and means for detecting operation of the current limiting element and for opening the switch in response thereto. While this may reduce deterioration of the current limiting element, it does not overcome the above mentioned constraints on the magnitude of the current flowing after operation of the current limiting element.

Accordingly, it is an object of the present invention to provide a current limiting device including a current limiting element of the type referred to, having a prolonged lifetime and such that current flowing after the current limitation can have a desired magnitude.

The present invention provides a current limiting device comprising a current limiting element of the type including a current limiting material in a solid or liquid form at normal current level, this material being vaporised by an overcurrent thereby rapidly increasing its resistance to limit said overcurrent, a switching element connected in series with said current limiting element, and first means for detecting the operation of the limiting element and opening the switching element in response thereto, characterised in that it further comprises a first impedance element connected across the series combination of said current limiting element and said switching element, and second means for automatically reclosing the switching element after opening thereof.

In accordance with the present invention, the current limiting element can limit an overcurrent and the switching element serially connected to it interrupts a follow current, while the current is diverted through a current limiting impedance element connected across the current limiting element. This measure reduces the time interval for which an overcurrent can flow through the current limiting element to an extremely short time, resulting in a reduction in damage to the structural components of the current limiting element and particularly the electrically insulating member. This can increase the number of the current limiting operations that the current limiting element can perform and therefore its lifetime. Also, since the current after the current limitation is determined by the magnitude of the current limiting impedance element, the magnitude of this current can be selected at will by varying the magnitude of the current limiting impedance element.

A second impedance element may be connected across the current limiting element.

The said first means, in one embodiment, comprise a current detector for detecting a change in the current flowing through the second impedance when the current limiting element operates, and energising means responsive to an output from the current detector, to open the switching element.

In another embodiment, the current limiting device is provided with a pressure buffering cylinder including a piston slidably moved therein, characterised in that an indicator rod is connected to said piston to extend outside of said current limiting element and is provided at an end disposed outside of the latter with indicator contacts means, the arrangement being such that, when said indicator rod is moved in response to the movement of said piston within said pressure buffer cylinder due to the operation of said current limiting element, said indicator contact means is operated to open said switching element.

The second means for automatically reclosing the switching element, in one embodiment, close the switching element after the elapse of a predetermined delay time from the opening of the switching element.

More particularly the second means may comprise delay means connected to said current detector to time out a predetermined delay time immediately after the operation of said current limiting element and produce an output upon the completion of the timing-out of said predetermined delay time, and energizing means responsive to said output from said delay means to close said switching element.

In an alternative arrangement, the said second means close the switching element automatically in response to the disappearance of the overcurrent flowing through the series combination of the current limiting element and switching element.

More particularly, the second means may comprise a current detector connected in series to said switching element to detect a zero magnitude of said overcurrent to produce an output and energizing means responsive to said output from said current detector to close said switching element.

The present invention will become more readily apparent from the following detailed description taken in conjunction with the accompanying drawings in which:

Figure 1 is a longitudinal sectional view of a conventional current limiting element;

Figure 2 is a circuit diagram of an impedance element connected across the current limiting element shown in Figure 1;

Figure 3 is a circuit diagram illustrating a circuit with which the current limiting element shown in Figure 1 is used;

Figure 4 is a circuit diagram of one embodiment of the current limiting device of the present invention;

Figure 5 is a graph illustrating waveforms of currents flowing through various points in the arrangement shown in Figure 4 and useful in explaining the operation of the present invention;

Figure 6 is a diagram similar to Figure 4 but illustrating another embodiment of the present invention; and

Figure 7 is a diagram similar to Figure 4 but illustrating another embodiment of the present invention.

Throughout the Figures like reference numerals designate identical or corresponding components.

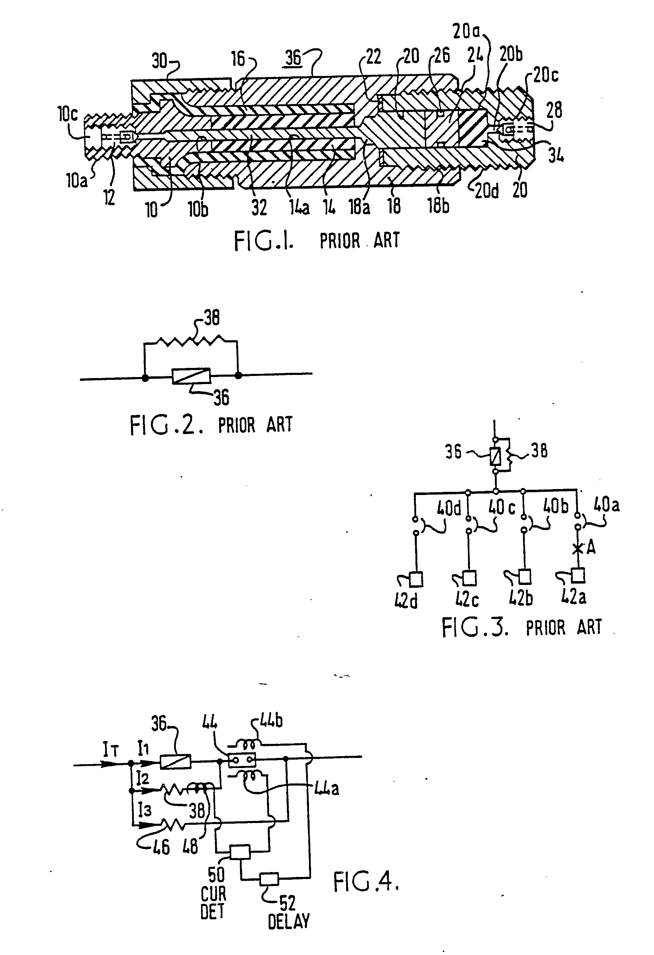

Referring now to Figure 1 of the drawings, there is illustrated a conventional current limiting element of the type described above. The arrangement illustrated comprises a first electrode cylinder 10 of suitable electrically conductive metallic material such as copper or brass including one end portion in the form of a threaded terminal 10a, an intermediate portion in the form of a flange and the other end portion terminating at a flat end surface perpendicular to the longitudinal axis thereof. The first electrode cylinder 10 has a longitudinal cylindrical hole 10b extending therethrough along the longitudinal axis except for the one end portion through which a thread hole 10c extends. That portion of the longitudinal hole 10b adjacent to the threaded terminal 10a is somewhat smaller in diameter than the remaining portion thereof and communicates with the threaded hole 10c, but a sealing element 12 formed, for example, of a needle valve is screw threaded into the threaded hole 10c to normally hermetically close the end of the smaller portion of the longitudinal hole 10b.

Then the first electrode cylinder 10 is connected on the other end surface to an electrically insulating cylinder 14 equal in diameter to the other end portion thereof and coaxial with the same. The electrically insulating cylinder 14 includes a longitudinal cylindrical hole 14a equal in diameter to and aligned with the larger diameter portion of the longitudinal hole 10b and is formed of an electrically insulating material which is very resistant to heat and alkali metals, for example, beryllia.

The connected first electrode cylinder 10 and electrically insulating cylinder 14, except for the threaded terminal 10a, are surrounded in intimate contact relationship by an electrically insulating member of a circular cross section complementary in shape thereto by having both ends surface flush with that surface of the first electrode cylinder 10 from which the threaded terminal 10a extends axially and the free end surface of the electrically insulating member 14 respectively and perpendicular to the common longitudinal axis of the two cylinders 10 and 14. The electrically insulating member 16 is preferably formed of an electrically insulating material prepared by sintering a mixture of pulverized mica, pulverized glass and a binder therefor.

Subsequently, the electrically insulating member 16 with the cylinders 10 and 14 is firmly fitted into a central cylindrical opening longitudinally extending through a second electrode cylinder 18 to leave that end portion of the member 16 adjacent to the threaded terminal 10a to be exposed. Thus the first electrode cylinder 10 is disposed to be opposite to the second electrode cylinder 18 through the electrically insulating cylinder and member 14 and 16 respectively.

The second electrode cylinder 18 includes further a stepwise flared cylindrical hole 18a coaxial and communicating with the central cylindrical opening 14a in the electrically insulating member 14 and terminating at a longitudinal cylindrical opening extending through the remaining portion of the second electrode cylinder 18 to be coaxial with the aligned longitudinal holes 10a and 14a and opening on that end surface thereof remote from the first electrode cylinder 10. The flared cylindrical hole 18a has that portion thereof adjacent to the central cylindrical opening 14a in the electrically insulating member 14 equal in diameter to and communicating with the latter and the last-mentioned longitudinal cylindrical opening has its inner periphery threaded except for that end portion thereof adjacent to the flared hole 18a to form a threaded opening 18b into which a pressure buffering cylinder 20 is screw threaded with a gasket 22 interposed therebetween to seal the flared hole 18a and the interior of the cylinder 20 from the exterior thereof.

The pressure buffering cylinder 20 is formed of any suitable metallic material and includes a longitudinal cylindrical hole 20a with a relatively large diameter, a narrow hole 20b and a threaded hole 20c extending therethrough in the named order to be coaxial with the cylinder 20 and with one another and connected to one another. Then a piston 23 is slidably disposed in the large diameter hole 20a through a piston ring or an O-ring 26. The pressure buffering cylinder 20 is also provided on the substantial part of the outer periphery with a threaded portion 20d. With the pressure buffer cylinder 20 fitted into the second electrode cylinder 18 by having an outer threaded periphery 20d thereof screw threaded into the threaded hole 18b in the latter cylinder 18, the holes 20a, 20b and 20c are coaxial with the holes 10b and 14a in the first electrode cylinder 10 and the electrically insulating cylinder 14 and the flared hole 18a in the second electrode cylinder 18 while the hole 20a is connected to the flared hole 18a and that end portion of the buffer cylinder 20 remote from the first electrode cylinder 10 extends from the second electrode cylinder 18 to form a mounting terminal.

Further disposed within the threaded hole 20c opening at the protruding end of the pressure buffer cylinder 20 is a sealing element 28 formed, for example, of a needle valve by screw threading the same into the threaded hole 20c to normally hermetically close the narrow hole 20b.

In order to render the mechanical connection of the first to the second electrode cylinder 10 and 18 respectively stronger, an outer cylindrical metallic shell 30 is fitted onto the exposed portion of the electrically insulating member 16 with the adjacent end portion of the second electrode cylinder 18 screw threaded into a free end portion of the shell 30.

The aligned holes 10b, 14a, 18a and that portion of the hole 20a disposed between the flared hole 18a and the piston 24 are charged with an amount of a current limiting material 32 as described above such as an alkali metal for example, sodium or potassium and that portion of the hole 20a disposed between the piston 24 and the sealing element 28 is charged with an amount of an inert gas 34 such as argon serving as a pressure buffering gas.

The arrangement as described above in conjunction with Figure 1 is generally designated by the reference numeral 36.

Upon the occurrence of an overcurrent flowing through the arrangement of Figure 1, at least part of the current limiting material 32 is vaporized to form a plasma at an elevated temperature, which presents a high resistance to the overcurrent and limits the latter to a predetermined magnitude. At that time a high vapour pressure is generated but it moves the piston 24 toward the sealing element 28 thereby to be buffered. After the limitation of the overcurrent, a circuit voltage is developed across both ends of the electrically insulating cylinder 14 or the first and second electrode cylinders 10 and 18 respectively but the electrically insulating member 16 can sufficiently withstand that circuit voltage. After having been limited by the arrangement of Figure 1, the overcurrent is interrupted by a circuit interrupter (not shown) serially connected to it. After the interruption of the overcurrent, the vaporized current limiting material 32 is cooled to be solidified or liquefied due to a back pressure exerted by the pressure buffering gas 34, resulting in the return of the circuit limiter 36 to its original normal state.

As illustrated in Figure 2, the current limiting element 36 shown in Figure 1 is in general connected across an impedance element 38 such as a resistor or a reactor for the purpose of decreasing electrical energy applied to the current limiting element on limiting an overcurrent and suppressing a switching voltage across the element. This measure is disclosed, for example, in Japanese patent publication No. 18193/1975.

Current limiting elements as described above are frequently used with electric systems called control or power centers such as shown in Figure 3. Such a system is disclosed in Japanese utility model publication No. 24651/1974 and will be subsequently outlined in conjunction with Figure 3.

In the arrangement illustrated in Figure 3 the current limiting element 36 is connected across the impedance element 38 and is in the main line which is, in turn, divided into a multitude of branches, in this case, four branches, each including a subordinate circuit interrupter 40a, 40b, 40c or 40d and a load 42a, 42b, 42c or 42d serially connected thereto. Assuming that a short circuit has occurred at a point A in that branch including the circuit interrupter 40a and the load 42a, the current limiting element 36 is immediately operated to limit the resulting short circuiting current to protect the associated circuit interrupter 40a. After a short interval the circuit interrupter 40a is operated to interrupt the limited short circuit current. Under these circumstances, both a follow current through the current limiting element 36 and a current flowing through the parallel impedance element 38 are supplied to the remaining branches, resulting in a power supply system capable of disconnecting the failed circuit from the system without an interruption of the power supply and therefore high in reliability. Also since each of the circuit interrupters 40a through 40d is required only to interrupt a current limited by the current limiting element 36, the circuit interrupter can be of reduced interrupting capacity resulting in an economical power supply system.

In the arrangement of Figure 3, however, the current limiting element 36 has the limited fault current continuing to flow therethrough until one of the subordinate circuit interrupters 40a, 40b, 40c or 40d is operated to disconnect the failed branch from the system. Meanwhile the current limiting material 32 in the current limiting element 36 is in the form of a plasma having a temperature of several thousand degrees Celsius. This plasma at such an elevated temperature damages the structural components of the current limiting element 36 and particularly the electrically insulating member 14 exposed to the same resulting, causing a decrease in the number of current limiting operations that the current limiting element can perform and therefore in the useful lifetime thereof. In addition, the current through the system after the current limitation is determined by both a follow current flowing through the current limiting element 36 and that flowing through the parallel impedance element 38. As described in the above-cited Japanese patent publication No. 18193/1975, the parallel impedance element 38 has its magnitude determined in view of a decrease in electric energy developed on the current limiting element during the current limitation. This has resulted in another problem that the magnitude of the parallel impedance element can be chosen at will.

The present invention contemplates to solve the problems of the prior art practice as described above by the provision of an impedance element connected across a series combination of the current limiting element as described and an associated switching element.

Referring now to Figure 4, there is illustrated one embodiment according to the current limiting device of the present invention. The arrangement illustrated comprises the current limiting element 36 as described above in conjunction with Figure 1, a switch element 44 connected in series thereto and a current limiting impedance element 46 connected across the serially connected current limiting and switching elements 36 and 44 respectively. The current limiting impedance element 46 may be a resistor or a reactor. The current limiting element 36 is also connected across a series combination of the impedance element 38 as described above in conjunction in Figure 2 and a current transformer 48 and the switching element 44 includes a trip coil 44a for opening the same upon the energization thereof and a closing coil 44b for closing it upon the energization thereof.

The current transformer 48 includes a secondary winding connected to a current detector 50 which is, in turn, connected directly to the trip coil 44a and also via a delay element 52 to the closing coil 44b. The current detector 50 receives an output current from the current transformer 48 transformed from a current flowing the parallel impedance element 38 to detect the last-mentioned current thereby to produce an output which, in turn, energizes the trip coil 44a of the switching element 44 to open the switching element 44. The delay element 52 is operative to time out a predetermined delay time immediately after the current detector 50 has produced the output for opening the switch element 44 and upon the timing-out of that delay time produce an output for energizing the closing coil 44b of the switching element 44 in order to close the switching element 44.

It is assumed that the switching element 44 is connected to the multitude of parallel branches shown in Figure 3.

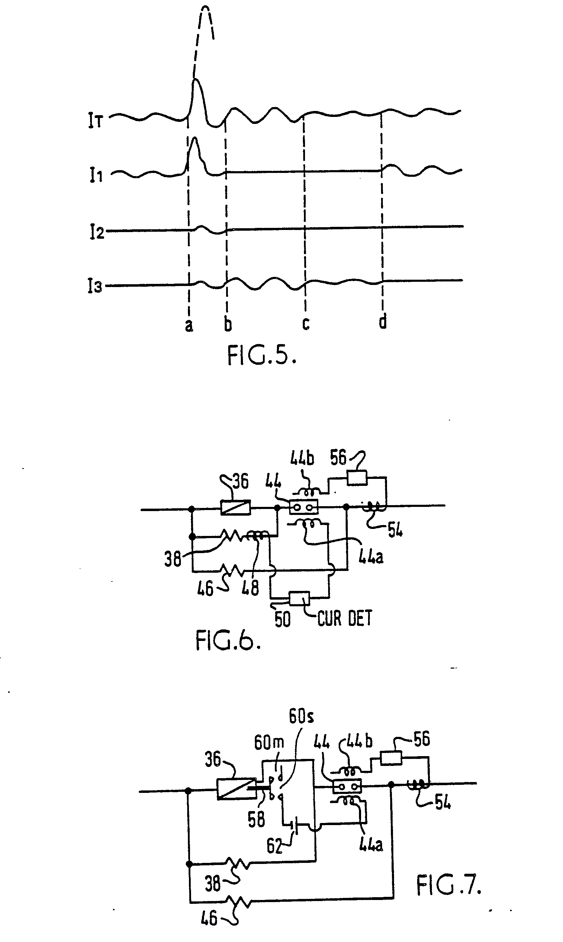

The operation of the arrangement shown in Figure 4 will now be described in connection with Figure 5 wherein there is illustrated current waveforms developed at various points in the arrangement. Since the current limiting and switching elements 36 and 44 respectively have individual impedances less than those of the parallel and current limiting impedance elements 38 and 46 respectively, most of a normal current flows through the former elements 36 and 44 as shown by current waveforms $I_1$ and $I_2$ flowing through the current limiting and parallel impedance elements 36 and 38 respectively in Figure 5.

It is assumed that in the arrangement of Figure 3 a fault has occurred at a point A in the branch including the circuit interrupter 40a and the load 42a resulting in a flow of an overcurrent as shown by a current waveform $I_T$ flowing through the system in Figure 5 at a time point a illustrated in the same Figure, the current limiting material 32 disposed in the current limiting element 36 is vaporized to present a high resistance to the overcurrent to permit shunt currents to flow through the parallel and current limiting impedance elements 38 and 46 respectively as shown at the current waveform $I_2$ and current waveform $I_3$. Then the current detector 50 detects the shunt current flowing through the current limiting impedance element 38 and through the current transformer 48 to energize the trip coil 44$a$ of the switching element 44. This results in the opening of the switching element 44 at a time point $b$ as shown in Figure 5. Then at a time point $c$ shown in Figure 5, a subordinate current interrupter, in this case, that shown by 40$a$ in Figure 3 is operated to disconnect a failed branch from the system as described above in conjunction with Figure 3.

Also in parallel with the operation of the current detector 50 as described above, the delay element 52 receives the output from the current detector 50 to time out the predetermined delay time and to energize the closing coil 44$b$ of the switching element 44 on the completion of that timing-out. This results in the closure of the switching element 44 at a time point $d$ shown in Figure 5. Thus the arrangement of Figure 4 is restored to its original state to be ready for the next succeeding operation. Also the circuit interrupter 40$a$ can be closed after the fault at the point A has been removed.

In Figure 5, a dotted line extended from current waveform $I_T$ designates the overcurrent developed in the absence of the current limiting device.

·From the foregoing it will readily be understood that with the arrangement of Figure 4 substituted for the parallel combination of the current limiting and parallel impedance elements 36 and 38 respectively in the arrangement shown in Figure 3, for example, the circuit interrupter 40$a$ can interrupt a failure current limited by the current limiting element 36 during the delay time as described above.

In Figure 6, there is illustrated an embodiment of the present invention in which there is detected a current flowing through the main circuit including the current limiting and switching elements and the restoring operation is automatically performed when the overcurrent becomes zero.

The arrangement illustrated is different from that shown in Figure 4 only in that in Figure 6, a separate current transformer 54 is connected in series to the switching element 44 and includes a secondary winding connected via a separate current detector 56 to the closing coil 44$b$ of the switching element 44 with the delay element 52 omitted. The separate current detector 56 is operative to detect zero magnitude of the principal current flowing through the current limiting and switching elements 36 and 44 respectively by means of the separate current transformer 54 and to supply an output to the closing coil 44$b$ of the switching element 44.

As in the arrangement of Figure 4, the occurrence of an overcurrent causes first the current limiting element 36 to be operated and then the switching element 44 to be put in its open position. Following this, for example, the subordinate circuit interrupter 40$a$ (see Figure 3) is operated to disconnect the particular failed branch from the system resulting in the disappearance of the overcurrent. The separate current detector 56 detects this disappearance of the overcurrent through the separate current transformer 54 and energizes the closing coil 44$b$ to put the switching element 44 in its closed position. At that time the arrangement of Figure 6 is restored to its original state to be ready for the next succeeding operation. As in the arrangement of Figure 4, the opened subordinate circuit interrupter such as shown by 40$a$ in Figure 3 can be closed after the removal of the fault.

Figure 7 shows another embodiment of the present invention including means for detecting the operation of the current limiting element different from that included in the arrangement shown in Figure 4 or 6. In the arrangement illustrated, an indicator rod 58 is connected to the piston 24 in the pressure buffering cylinder 20 (see Figure 1) and extends outside of the current limiting element 36. The indicator rod 58 is provided at the end disposed outside the element 36 with a pair of movable indicator contacts 60$m$ arranged to be separably engaged by opposite stationary indicator contacts 60$s$. One of the stationary contacts 60$s$ is connected to one end of the trip coil 44$a$ of the switching element 44 through a control source 62 shown in Figure 7 as comprising a DC source and the other stationary contact 60$s$ is connected to the other end of the trip coil 44$a$ through a lead (not shown).

When the current limiting element 36 is operated to move the piston 24, and therefore the indicator rod 58, the movable indicator contacts 60$m$ are engaged by the associated stationary contacts 60$s$ to permit the trip coil 44$a$ to be energized from the control source 62 resulting in the opening of the switching element 44.

The indicator rod 58 and therefore the set of indicator contacts 60$m$ to 60$s$ can be operated with no significant delay relative to the operation of the current limiting element 36.

Japanese utility model publication No. 12512/ 1969 discloses detection of the operation of the current limiting element 36 with the closure of the indicator contact set 60$m$—60$s$ due to the movement of the indicator rod 58 of the current limiting element 36 as described above in conjunction with Figure 7.

The arrangement of Figure 6 is advantageous over that shown in Figure 4 in that the former can be restored to its original state within a short time interval as compared with the latter, because the current detector 56 detects the disappearance of an overcurrent.

Also the arrangement of Figure 7 is advantageous in a further increase in the number of the current limiting operations enabled by the current limiting element and therfore in its lifetime. This is because the operation of the indicator rod 58 and therefore the set of indicator contacts 60$m$—60$s$ can be actuated with substantially no delay time with respect to the operation of the current limiting element 36, to permit the switching element 44 connected in series to the current limiting element to be opened extremely quickly following the operation of the current limiting element 36.

While the present invention has been illustrated and described in conjunction with a few preferred embodiments thereof it is to be understood that numerous changes and modifications may be resorted to without departing from the scope of the invention. For example, the parallel impedance element 38 in the arrangement of Figure 4 may be omitted provided that the current limiting impedance element 46 has a magnitude meeting the requirements set forth in the above-cited Japanese patent application No. 18198/1975. In this case, however, it is necessary to connect the current transformer 48 in series to the current limiting impedance element 46. Although the arrangement of Figure 6 detects the disappearance of an overcurrent due to the operation of an associated subordinate circuit interrupter (for example, the circuit interrupter 40*a* shown in Figure 3) through the detection of a current flowing through the main circuit, a signal for the opening of that subordinate circuit interrupter may be directly applied to the closing coil 44*b* of the switching element 44 to close the element 44. Furthermore, in the arrangement of Figure 7 a thrust force provided by the indicator rod 58 may be utilized to open the switching element 44 directly in interlock with the operation of the current limiting element 36 as disclosed in any of Japanese patent publication Nos. 25580/1973, 943/1974 and 2150/1974. In addition, the current limiting element 36 may be constructed to be integral with the switching element 44 whereby an operating force provided by the piston 24 is utilized to directly operate the switching element 44 as disclosed in Japanese patent publication No. 7932/1974.

## Claims

1. A current limiting device comprising a current limiting element (36) of the type including a current limiting material in a solid or liquid form at normal current level, this material being vaporised by an overcurrent thereby rapidly increasing its resistance to limit said overcurrent, a switching element (44) connected in series with said current limiting element (36) and first means (48, 50, 44a, Figures 4 and 6; 58, 60m, 60s, 62, 44a, Figure 7) for detecting the operation of the limiting element (36) and opening the switching element (44) in response thereto, characterised in that it further comprises a first impedance element (46) connected across the series combination of said current limiting element (36) and said switching element (44), and second means (52, 44b, Figure 4; 54, 56, 44b, Figures 6 and 7) for automatically reclosing the switching element (44) after opening thereof.

2. A current limiting device as claimed in claim 1 characterised in that a second impedance element (38) is connected across said current limiting element (36).

3. A current limiting device as claimed in claim 2 characterised in that the said first means comprise a current detector (48, 50) for detecting a change in current flowing through said second impedance element (38) when said current limiting element (36) responds to said flow of overcurrent therethrough to exhibit a high electric resistance, and energising means (44a) responsive to an output from said current detector (48, 50) to open said switching element (44; Figures 4 and 6).

4. A current limiting device as claimed in claim 1 or 2, wherein said current limiting element (36) is provided with a pressure buffer cylinder (20) including a piston (24) slidably movable therein, characterised in that said first means comprise an indicator rod (58) connected to said piston (24) to extend outside of said current limiting element (36) and provided at an end disposed outside of the latter with indicator contact means (60m and 60s), the arrangement being such that, when said indicator rod (58) is moved in response to the movement of said piston (24) within said pressure buffer cylinder (20) due to the operation of said current limiting element (36), said indicator contact means (60m and 60s) is operated to open said switching element (44; Figure 7).

5. A current limiting device as claimed in claim 1, 2, 3 or 4 characterised in that the second means (44b, 52; Figure 4) close the switching element (44) upon the lapse of a predetermined delay time after the opening thereof.

6. A current limiting device as claimed in claim 5 characterised in that the second means comprise delay means (52) connected to said current detector (50) to time out a predetermined delay time immediately after the operation of said current limiting element (36) and produce an output upon the completion of the timing-out of said predetermined delay time, and energizing means (44b) responsive to said output from said delay means (52) to close said switching element (44; Figure 4).

7. A current limiting device as claimed in claim 1, 2, 3 or 4 characterised in that the second means (54, 56, 44b) close the switching element (44) automatically in response to the disappearance of said overcurrent flowing through said series combination of said current limiting element (36) and said switching element (44; Figures 6 and 7).

8. A current limiting device as claimed in claim 7 characterised in that the second means comprise a current detector (54, 56) connected in series to said switching element (44) to detect zero magnitude of said overcurrent to produce an output and energizing means (44b) responsive to said output from said current detector (54, 56) to close said switching element (44; Figures 6 and 7).

## Revendications

1. Dispositif limiteur de courant comprenant un élément limiteur de courant (36) du type comportant un matériau limiteur de courant sous une forme solide ou liquide à un niveau normal de courant, ce matériau se vaporisant par une surintensité de courant pour ainsi augmenter rapidement en résistance pour limiter ladite surintensité de courant, un élément de commutation (44) relié en série avec ledit élément limiteur de courant (36) et un premier moyen (48, 50, 44a, figures 4 et 6; 58, 60m, 60s, 62, 44a, figure 7) pour détecter le fonctionnement de l'élément limiteur (36) et ouvrir l'élément de commutation (44) en réponse à cela, caractérisé en ce qu'il comprend de plus un premier élément d'impédance (46) reliée à la combinaison en série dudit élément limiteur de courant (36) et dudit élément de commutation (44) et des seconds moyens (52, 44b, figure 4; 54, 56, 44b, figures 6 et 7) pour refermer automatiquement l'élément de commutation (44) après son ouverture.

2. Dispositif limiteur de courant selon la revendication 1 caractérisé en ce qu'un second élément d'impédance (38) est relié audit élément limiteur de courant (36).

3. Dispositif limiteur de courant selon la revendication 2 caractérisé en ce que ledit premier moyen comprend un détecteur de courant (48, 50) pour détecter un changement du courant s'écoulant à travers ledit second élément d'impédance (38) lorsque ledit élément limiteur de courant (36) répond audit écoulement de surintensité de courant à travers lui pour présenter une forte résistance électrique, et un moyen d'excitation (44a) répondant à une sortie dudit détecteur de courant (48, 50) pour ouvrir ledit élément de commutation (44; figures 4 et 6).

4. Dispositif limiteur de courant selon la revendication 1 ou 2 où ledit élément limiteur de courant (36) est pourvu d'un cylindre d'amortissement de pression (20) comprenant un piston (24) qui y est mobile en coulissant, caractérisé en ce que ledit premier moyen comprend une tige d'indicateur (58) reliée audit piston (24) pour s'étendre en dehors dudit élément limiteur de courant (36) et pourvue, à une extrémité disposée à l'extérieur de ce dernier, d'un moyen de contact d'indicateur (60m et 60s), l'agencement étant tel que, lorsque ladite tige d'indicateur (58) est déplacée en réponse au mouvement dudit piston (24) dans ledit cylindre d'amortissement de pression (20) du fait du fonctionnement dudit élément limiteur de courant (36), ledit moyen de contact d'indicateur (60m et 60s) fonctionne pour ouvrir ledit élément de commutation (44; figure 7).

5. Dispositif limiteur de courant selon la revendication 1, 2, 3 ou 4 caractérisé en ce que le second moyen (44b, 52; figure 4) ferme l'élément de commutation (44) après l'écoulement d'un retard prédéterminé après son ouverture.

6. Dispositif de limitation de courant selon la revendication 5 caractérisé en ce que les seconds moyens comprennent un moyen retardateur (52) relié audit détecteur de courant (50) pour déclencher un retard prédéterminé immédiatement après le fonctionnement dudit élément limiteur de courant (36) et produire une sortie à la fin dudit retard prédéterminé, et un moyen d'excitation (44b) répondant à ladite sortie dudit moyen retardateur (52) pour fermer ledit élément de commutation (44; figure 4).

7. Dispositif limiteur de courant selon la revendication 1, 2, 3 ou 4 caractérisé en ce que les seconds moyens (54, 56, 44b) ferment l'élément de commutation (44) automatiquement en réponse à la disparition de ladite surintensité de courant s'écoulant à travers ladite combinaison en série dudit élément limiteur de courant (36) et dudit élément de commutation (44; figures 6 et 7).

8. Dispositif limiteur de courant selon la revendication 7 caractérisé en ce que les seconds moyens comprennent un détecteur de courant (54, 56) relié en série audit élément de commutation (44) pour détecter une grandeur nulle de ladite surintensité de courant pour produire une sortie et un moyen d'excitation (44b) répondant à ladite sortie dudit détecteur de courant (54, 56) pour fermer ledit élément de commutation (44; figures 6 et 7).

## Patentansprüche

1. Strombegrenzungsvorrichtung mit einem Strombegrenzungselement (36), das ein bie normalen Stromstärken flüssiges oder festes Strombegrenzungsmaterial aufweist, welches von einem Überstrom verdampft wird und dabei seinen Widerstand schnell erhöht, um den Überstrom zu begrenzen, mit einem mit dem Strombegrenzungselement (36) in Serie geschalteten Schaltelement (44) und mit ersten Elementen (48, 50, 44a, Figuren 4 und 6; 58, 60m, 60s, 62, 44a, Figur 7) zum Erfassen eines Ansprechens des Strombegrenzungselementes (36) und zum Öffnen des Schaltelementes (44) daraufhin, gekennzeichnet durch ein erstes Scheinwiderstandselement (46), das parallel zur Serienschaltung aus dem Strombegrenzungselement (36) und dem Schaltelement (44) geschaltet ist, und zweite Elemente (52, 44b, Figur 4; 54, 56, 44b, Figuren 6 und 7) zum automatischen Wiederschließen des Schaltelementes (44) nach dessen erfolgter Öffnung.

2. Strombegrenzungsvorrichtung nach Anspruch 1, dadurch gekennzeichnet, daß ein zweites Scheinwiderstandselement (38) parallel zum Strombegrenzungselement (36) geschaltet ist.

3. Strombegrenzungsvorrichtung nach Anspruch 2, dadurch gekennzeichnet, daß die genannten ersten Elemente aus einem Stromdetektor (48, 50) zum Erfassen einer Veränderung des Stromes, der durch das zweite Scheinwiderstandselement (38) fließt, wenn das Strombegrenzungselement (36) auf einen durch sich fließenden Überstrom anspricht, um einen hohen elektrischen Widerstand aufzuweisen, und aus einem Erregerelement (44a) besteht, das auf ein Ausgangssignal des Stromdetektors (48, 50) anspricht, um das Schaltelement (44, Figuren 4 und 6) zu öffnen.

4. Strombegrenzungsvorrichtung nach Anspruch 1 oder 2, wobei das Strombegrenzungselement (36) mit einem Druckpufferzylinder (20) mit einem darin gleitend bewegbaren Kolben (24) ausgestattet ist, dadurch gekennzeichnet, daß die genannten ersten Elemente aus einem Anzeigestift (58), der mit dem Kolben (24) verbunden ist, so daß er aus dem Strombegrenzungselement (36) herausragt, und aus an dessen Außenseite vorgesehenen Indikatorkontakten (60m und 60s) bestehen, wobei die Anordnung so gewählt ist, daß die Indikatorkontakte (60m und 60s) betätigt werden, um das Schaltelement (44) zu öffnen, wenn der Anzeigestift (58) infolge der Bewegung des Kolbens (24) in dem Druckpufferzylinder (20) aufgrund eines Ansprechens des Strombegrenzungselementes (36) bewegt wird.

5. Strombegrenzungsvorrichtung nach Anspruch 1, 2, 3 oder 4, dadurch gekennzeichnet, daß die zweiten Elemente (44b, 52, Figur 4) bei einem Fehler einer vorbestimmten Verzögerungszeit nach dem Öffnen des Schaltelementes (44) dieses schließen.

6. Strombegrenzungsvorrichtung nach Anspruch 5, dadurch gekennzeichnet, daß die genannten zweiten Elemente aus einem Verzögerungselement (52), das mit dem Stromdetektor (50) verbunden ist, um eine vorbestimmte Verzögerungszeit direkt nach dem Ansprechen des Strombegrenzungselementes (36) zu bemessen und ein Ausgangssignal nach dem Ablauf der Verzögerungszeit zu generieren, sowie aus einem Erregerelement (44b), das auf das Ausgangssignal des Verzögerungselementes (52) anspricht, um das Schaltelement (44, Fig. 4) zu schließen, bestehen.

7. Strombegrenzungsvorrichtung nach Anspruch 1, 2, 3 oder 4, dadurch gekennzeichnet, daß die genannten zweiten Elemente (54, 56, 44b) das Schaltelement (44) automatisch als Antwort auf das Verschwinden des durch die Serienschaltung aus dem Strombegrenzungselement (36) und dem Schaltelement (44, Figuren 6 und 7) fließenden Überstromes schließt.

8. Strombegrenzungsvorrichtung nach Anspruch 7, dadurch gekennzeichnet, daß die genannten zweiten Elemente aus einem Stromdetektor (54, 56), der in Reihe mit dem Schaltelement (44) geschaltet ist, um den Nullwert des Überstromes zu detektieren und ein Ausgangssignal zu generieren, und einem Erregerelement (44b) bestehen, das auf das Ausgangssignal des Stromdetektors (54, 56) anspricht und das Schaltelement (44, Figuren 6 und 7) schließt.

FIG.1. PRIOR ART

FIG.2. PRIOR ART

FIG.3. PRIOR ART

FIG.4.

FIG.5.

FIG.6.

FIG.7.